# EUROPEAN PATENT APPLICATION

(11) **EP 2 428 143 A1**
(43) Date of publication of application: **14.03.2012**
(21) Application number: 10425297.8
(22) Date of filing: 14.09.2010
(51) Int. Cl.: A47J 31/36, A47J 31/46

(54) **Device for preparing espresso coffee**

(71) Applicant: Gruppo Cimbali S.p.A., 20082 Binasco (MI) (IT)
(72) Inventor: Maver, Marino, 20082 Binasco (MI) (IT)
(74) Representative: Perani, Aurelio

(57) **Abstract**

A device for preparing espresso coffee in a coffee machine comprising a source (1) for supplying water at a predetermined pressure, a water heater (3), a unit (32) for controlling the functions of the machine, at least one group (10) which is for preparing the coffee and which is provided with a chamber, into which the coffee is placed and pressurized hot water from the heater (3) is conveyed and from which the coffee is dispensed via a dispensing outlet (22), and a valve device (12) for controlling the closing and opening of the dispensing outlet (22). According to the invention, the device is provided with a valve device (12) comprising a valve seat (13) and a shutter (15), with an end (14) suitable for becoming engaged with and disengaged from the valve seat (13), first motor means (28) which are arranged on the shutter (15) in order to maintain it in an engagement position with the valve seat (13) for a predetermined time by means of an urging force which is greater than the urging force applied to the end (14) of the shutter (15) by the pressure of the water supplied to the chamber of the group (10) for preparing the coffee and second motor means (17, 18) for disengaging the shutter (15) from the same valve seat (13) after the predetermined time has elapsed.

## Description

The present invention relates to a device for preparing espresso coffee in a coffee machine comprising a source for supplying water at a predetermined pressure, a water heater, a unit for controlling the functions of the machine, at least one group which is for preparing the coffee and which is provided with an extraction chamber, into which the coffee is placed and pressurized hot water supplied by the source is conveyed and from which the coffee is dispensed via a dispensing outlet, and a valve device for controlling the closing and opening of the dispensing outlet.

As is known, in an espresso coffee machine the drink is obtained by forcing pressurized water through a compact layer of ground coffee which is placed under loose conditions in a filter carrier or by way of a breakable capsule, inside which there is a measure of ground coffee.

The methods, by which the pressure is generated and applied to the ground coffee have been the subject of a large number of inventions. In particular, it is known among those operating in the field that the substantially dynamic cycle for extracting the drink has to be preceded by a "static" initial step because, before the water begins to flow through the ground coffee, the entire layer of ground coffee must be, to the greatest possible extent, wet in a homogeneous manner in order to prevent the formation of preferential paths, through which the water may flow.

During the operation for extracting the espresso coffee, this step is normally referred to as the "infusion" step since the ground coffee is soaked in water without significant flow. In order to obtain this effect, it is known to use devices and arrangements to cause the hot, pressurized water to reach the ground coffee without turbulence and the force of the pressure to begin only after a period of time that is normally not less than 5 seconds.

A specific technique known for controlling the flow of water, not only in the initial step but over the entire process for extracting the drink, involves an interception valve being interposed in the pipe between the extraction chamber and the dispensing opening. An example of this technology is described in the Italian patent No. 464838 which proposes a valve for manual actuation in keeping with the time when machines for preparing the coffee were substantially manual.

With the spread of machines of the completely automatic type, it has been proposed also to automate the operation of those valves. A very widespread technique is the one set out in EP-A-0073739 and in EP-A-0542045, where the initial blocking of the flow of hot pressurized water is carried out by a valve controlled by a spring which opens when the force exerted by the pressure of the coffee being discharged exceeds the force of the spring itself. With that known technology, it is impossible to control simultaneously the opening time of the valve and the compression of the infusion inside the chamber because, in order to delay the opening of the valve, it is necessary to maintain for the desired time the force of the water pressure at a value below that which brings about the opening of the valve; furthermore, during the extraction step, the cross-section of flow through the shutter of the valve is not controlled and depends only on the force of the coffee which passes through it.

A solution considered in order to optimize the dynamic flows of the drink during its preparation and dispensing is described in EP-A-1133944; however, this solution does not allow control of the flow of coffee in the initial dispensing step.

Furthermore, all the known solutions of the above-mentioned type have also in any case demonstrated poor functionality caused by the inevitable deposits which are produced by the coffee therein and which are difficult to remove.

An object of the present invention is therefore to provide a device which is for controlling the flow of coffee during its preparation and dispensing and which overcomes the disadvantages encountered in the devices of the prior art and which allows complete control of the initial compression step of the ground coffee, an adjustable discharge cross-section in the dispensing valve and good execution of the cleaning cycles so that it is possible to eliminate or at least reduce the formation of deposits.

The object is achieved by a device of the type indicated in the introduction and characterized in accordance with the appended claim 1 which is incorporated herein by reference.

The invention will now be described in greater detail with reference to one preferred embodiment thereof which is illustrated by way of non-limiting example in the appended drawings, in which:

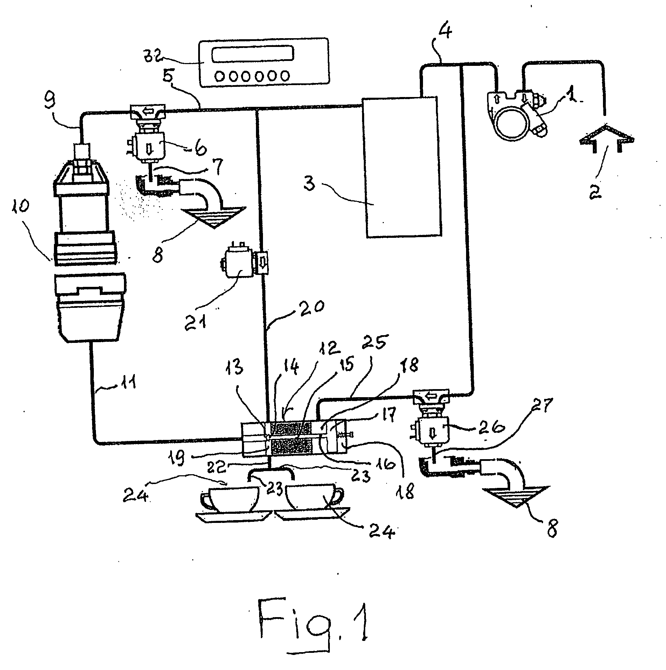

- Figure 1 is a schematic view of the device according to the invention with all the hydraulic circuit portions of a coffee machine facilitating comprehension of the invention itself;
- Figure 2 is a sectional view of the valve device for controlling the flow of the coffee in the context of the device according to the invention.

With reference to the above-mentioned Figures, a pump which serves to pressurize the water from the supply arrangement 2 is designated 1, for example, a hydraulic distribution network, and which conveys it to a conventional heating device 3 through the pipe 4. The heating device, via a pipe 5, is connected to a three-way electric valve 6 which is provided to dispense the coffee. That valve 6 is provided with a pipe 7 which is directed towards the discharge 8 and a pipe 9 which is directed towards the dispensing device 10 of the machine. That device can be constituted by a conventional group, in which a measure of ground coffee is introduced in the loose state or by an equally conventional dispensing group which functions with capsules.

The dispensing group 10 is directly connected, by means of the pipe 11, to a valve device which is generally designated 12.

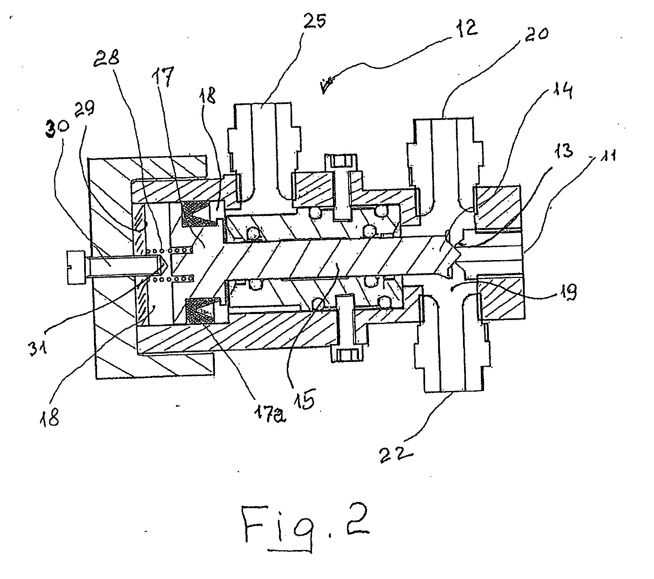

The valve device 12, which is illustrated in greater detail in Figure 2, comprises a valve seat 13, against which there is engaged the end 14 of a shutter 15 whose other end 16 is provided with a piston 17 which is slidingly received in a hydraulic cylinder 18 with a gasket 17a being interposed.

There is formed, around the valve seat 13 and the end 14 of the shutter 15, a chamber 19, to which there extends the pipe 20 which is from the heating device 3 and which is intercepted by an electric valve 21 which is intended to supply hot water to the chamber 19 for the purposes and the conditions which will become clear from the remainder of the description.

The same chamber 19 is connected to the dispensing pipe 22 which extends as far as the openings 23 which are provided for dispensing the coffee into cups 24.

There is connected to the hydraulic cylinder 18 a pipe 25 which, with an electric valve 26 being interposed, is connected to the pipe 4 of the pump 1, which supplies pressurized water.

The electric valve 26 is also provided with a pipe 27 which is directed to the discharge 8.

With particular reference to Figure 2, the valve device 12 comprises a resilient member which is constituted by the spring 28 which is positioned between the piston 17 and the wall 29 which delimits the bottom of the hydraulic cylinder 18.

The spring 28, which constitutes the first motor means according to the invention, serves to urge the shutter 15 towards the valve seat 13, maintaining the end 14 against that seat with a force greater than the force exerted by the coffee coming from the dispensing group 10 and thereby keeping closed the dispensing outlet for the coffee which cannot flow out into the chamber 19 and from that location into the cups 24.

The valve device is also provided with an adjustment element for limiting the travel of the piston 17 in the cylinder 18. The adjustment element is constituted, in the preferred example, by an adjustment screw 30 which is engaged in the wall 29 delimiting the bottom of the cylinder 18. The end 31 is directed towards the piston 17 in the axis of the longitudinal extent of the shutter 15 and is adjusted to a predetermined distance therefrom so that, when the shutter 15 is moved by the piston 17 in the direction for opening the valve seat 13, the travel thereof is delimited by the engagement of the piston against the end of the screw and the whole of the movement of the end 14 of the shutter is thereby adjusted by the valve seat 13, and therefore the degree of opening of the dispensing outlet.

Owing to the movement of the shutter 15 so as to carry out the disengagement of the end 14 from the valve seat 13, the piston 17 and the relevant cylinder 18 which represent the second motor means in accordance with the invention have such dimensions that they apply to the shutter 15 a force greater than that brought about by the spring 28.

A control unit 32, of the electronic type, serves in conventional manner to control the operating controls of the machine and the device of the invention.

The operation of the device is as follows.

When a dispensing operation has been started and the dispenser 10 has been charged with the appropriate measure of coffee, the pump 1 is started and there is actuated the electric valve 6 which serves to convey the water, which is urged by the pump 1 through the heater 3 to the dispenser 10. The hot water flows through the coffee contained in the dispenser 10 and, because the shutter 15 which blocks the passage through the valve seat 13 prevents the discharge thereof towards the chamber 19 and the pipe 22, it compresses the air contained inside the ground coffee and the pipe 11, confining it in tiny bubbles. This compression state is maintained for a time of approximately from 5 to 7 seconds so as to allow the fibres of the small coffee grains to absorb the water.

After that initial time, whose duration may be programmed as desired in the control unit 31 for each of the types of coffee which it is desirable to dispense, there is actuated the electric valve 27 which conveys pressurized water to the cylinder 18 via the pipe 25. Under the action of the water pressure, the piston 17 axially moves the shutter 15 by generating a force greater than the tension of the spring 28. The end 14 of the shutter 15 becomes disengaged from the valve seat 13, allowing the mixture of air and the infusion to flow towards the openings 23 and the cups 24. The travel of the shutter 15 can be adjusted by means of the adjustment element 30 so that the fluid, which is constituted by water and which contains in solution, in emulsion and in suspension the substances extracted from the ground coffee, the fats, the tiny particles and the tiny bubbles of compressed air, is compressed during passage between the valve seat 13 and the end 14 of the shutter, mixing the substances so as to confer on the coffee the "body" and the dense and creamy consistency which are characteristic of espresso coffee.

If it is necessary to make a coffee of the so-called "americano" type, the electric valve 21 being opened allows the addition, via the pipe 20, of an additional quantity of hot water directly into the chamber 19 downstream of the dispensing group 10.

When the programmed measure of coffee is added, the three-way electric valve 6 is deactivated and the residual pressure inside the dispensing group 10 is conveyed towards the discharge 8 whilst the three-way electric valve 26 still remains active for some seconds so as to keep the end 14 of the shutter 15 disengaged from the valve seat 13 to allow the coffee to flow completely out of the pipe 11, the chamber 19 and the pipe 22. When the electric valve 26 is deactivated, the pressure which acts on the piston 17 is discharged via the third way 27 of the valve towards the discharge 8. Therefore, the shutter 15 rotates into a closure position with the end 14 in engagement with the valve seat 13, being mechanically urged by the spring 30.

At the end of a dispensing operation, the device according to the invention allows effective cleaning of the chamber 19 and the parts directly involved with the flow of the coffee to be carried out, in particular the end 14 of the shutter and the valve seat 13.

To that end, the electric valve 21 being opened allows that cleaning to be carried out with a specific quantity of hot water under the control of the control unit 32.

Although the movement of the shutter 15 for causing the disengagement of the end 14 thereof from the valve seat 13 is brought about, in the preferred form of the invention, by using the same source of pressurized water that is used to prepare the drink, it will clearly be appreciated that control may be conferred on the piston 17, in an alternative manner, supplying the cylinder 18 with compressed air which, in the espresso coffee machines of recent or modern construction, is available owing to the air compressor with which they are provided.

## Claims

1. A device for preparing espresso coffee in a coffee machine comprising a source (1) for supplying water at a predetermined pressure, a water heater (3), a unit (32) for controlling the functions of the machine, at least one group (10) which is for preparing the coffee and which is provided with a chamber, into which the coffee is placed and pressurized hot water from the heater (3) is conveyed and from which the coffee is dispensed via a dispensing outlet (22), and a valve device (12) for controlling the closing and opening of the dispensing outlet (22), **characterized in that** the valve device (12) comprises a valve seat (13) and a shutter (15), with an end (14) suitable for becoming engaged with and disengaged from the valve seat (13), first motor means (28) which are arranged on the shutter (15) in order to maintain it in an engagement position with the valve seat (13) for a predetermined time by means of an urging force which is greater than the urging force applied to the end (14) of the shutter (15) by the pressure of the water supplied to the chamber of the group (10) for preparing the coffee and second motor means (17, 18) for disengaging the shutter (15) from the same valve seat (13) after the predetermined time has elapsed.

2. A device according to claim 1, **characterized in that** the first motor means arranged on the shutter comprise a resilient member (28) which urges the shutter (15) to keep the end (14) thereof in engagement with the valve seat (13) and therefore to keep the coffee dispensing outlet (22) closed.

3. A device according to claim 1 and claim 2, **characterized in that** the second motor means arranged on the shutter comprise a piston (17) which is operatively connected to the opposite end (16) of the shutter (15) to the end (14) which is engaged with the valve seat (13), a hydraulic cylinder (18) in which the piston (17) is slidingly received in a sealing manner, the cylinder (18) being connected to the same source (1) for supplying pressurized water and being provided with a cross-section capable of applying to the shutter (15) a force which has a direction counter to that applied by the resilient member (28) and a magnitude greater than that of the resilient member (28), moving the end (14) of the shutter (15) out of engagement with the valve seat (13) and bringing about the opening of the coffee dispensing outlet (22).

4. A device according to any one of claims 1 to 3, **characterized in that** the valve device (12) comprises a member (30) for limiting the movement of the end (14) of the shutter (15) which finishes by moving out of the valve seat (13).

5. A device according to claim 4, **characterized in that** the member for limiting the movement of the end of the shutter comprises a screw (30), whose end (31) is positioned in the cylinder (18) and is directed axially towards the piston (17), the screw (30) being adjustable in terms of axial position from the outer side of the cylinder (18).

6. A device according to any one of claims 1 to 5, **characterized in that** the valve device (12) comprises a chamber (19) which extends round the valve seat (13) and the end (14) of the shutter and which is in communication with the dispensing outlet (22), a pipe (20) for the admission of pressurized water into the chamber (19), the pipe (20) being connected to the pressurized water source (1) with an electric valve (21) for intercepting the pipe being interposed.
